(19) Europäisches Patentamt

European Patent Office

Office européen des brevets

(11) **EP 4 424 217 A1**

(12) **EUROPEAN PATENT APPLICATION**

(43) Date of publication:
**04.09.2024 Bulletin 2024/36**

(21) Application number: **23159667.7**

(22) Date of filing: **02.03.2023**

(51) International Patent Classification (IPC):
**A47J 37/06** *(2006.01)* **A47J 36/32** *(2006.01)*

(52) Cooperative Patent Classification (CPC):
**A47J 37/0641; A47J 36/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Versuni Holding B.V.**
**5656 AE Eindhoven (NL)**

(72) Inventors:
- **MIKULA, Christian**
  **5656 AE Eindhoven (NL)**
- **MURBACHER, Werner**
  **5656 AE Eindhoven (NL)**
- **OBERSTEINER, Heimo**
  **5656 AE Eindhoven (NL)**

(74) Representative: **Vollering, Stefanus Franciscus Maria**
**Versuni Holding B.V.**
**High Tech Campus 42**
**5656 AE Eindhoven (NL)**

(54) **COOKING APPARATUS WITH FOOD TEMPERATURE SENSOR AND METHOD OF OPERATING THE SAME**

(57) Provided is a system (100) for controlling a cooking apparatus (102), which cooking apparatus comprises a cooking chamber (104) and a heating system (106). The system comprises a controller (122) configured to receive a target core temperature to which food received in the cooking chamber is to be heated. The controller controls power supply to the heating system such that the heating system heats the cooking chamber until a trigger core temperature of the food sensed by the food temperature sensor is reached. The controller then reduces or ceases power supply to the heating system in response to the trigger core temperature being reached. The trigger core temperature is lower than the target core temperature. Further provided is a related method and computer program.

FIG. 1

EP 4 424 217 A1

**Description**

FIELD OF THE INVENTION

This invention relates to a cooking apparatus, such as a cooking apparatus comprising a table-top cooking appliance, whose operation is controlled using a food temperature sensor for sensing a core temperature of food being cooked using the cooking apparatus.
The invention also concerns a method of operating such a cooking apparatus, and a related computer program.

BACKGROUND OF THE INVENTION

Various different types of cooking appliance are known, such as table-top cooking appliances. Table-top cooking appliances are positionable by the user, and designed to fit, on a table-top or kitchen work-top. Thus, table-top cooking appliances are different from built-in cooking appliances that are permanently installed in the kitchen.
One such type of table-top cooking appliance is the air fryer. Air fryers are already common kitchen appliances but their popularity continues to grow. This may be at least partly due to air fryers tending to consume less energy relative to built-in cooking appliances.
Known cooking appliances offer automatic settings and cooking programs for many different foods and preparations. Important parameters such as time and temperature can also be set and permanently monitored. This makes it possible to achieve a desired cooking temperature and for the user to be informed when the cooking process is complete.
However, challenges in designing such automatic settings and cooking programs remain, particularly in terms of promoting energy-efficient cooking, and providing a desirable cooking result throughout the cooked food, including at the food's exterior.

SUMMARY OF THE INVENTION

The invention is defined by the claims.
According to examples in accordance with an aspect of the invention, there is provided a cooking apparatus comprising: a cooking chamber for receiving food; a heating system for heating the cooking chamber; a food temperature sensor for sensing a core temperature of the food; and a controller configured to: receive a target core temperature to which the food is to be heated; receive one or more food parameters and/or one or more cooking apparatus-related parameters; set a trigger core temperature that is lower than the target core temperature using the one or more food parameters and/or one or more cooking apparatus-related parameters; control power supply to the heating system such that the heating system heats the cooking chamber until the trigger core temperature of the food is sensed by the food temperature sensor to be reached; reduce or cease said controlled power supply to the heating system in response to the trigger core temperature being sensed by the food temperature sensor to be reached; and generate a control signal signifying completion of cooking of the food in the cooking chamber, while the power supply to the heating system remains reduced or ceased, when the target core temperature is sensed by the food temperature sensor to be reached.
The present invention is at least partly based on the realization that a food temperature sensor for sensing a core temperature of food being cooked in a cooking chamber heated by a heating system can be used to make cooking more energy efficient. In particular, the food temperature sensor can assist in making appropriate use of residual heat in the cooking chamber following reduction or cessation of power supply to the heating system.
To this end, the power supply is reduced or ceased in response to the core temperature of the food, as sensed using the food temperature sensor, reaching a trigger core temperature that is lower than the target core temperature to which the food is intended to be heated, e.g. corresponding to a user-selected doneness level, such as rare, medium, well-done, etc.
This reducing or ceasing of the power supply to the heating system may cause the temperature of the cooking chamber to decrease, e.g. from a set cooking chamber temperature employed prior to the trigger core temperature being reached.
However, the core temperature of the food may continue to increase, in spite of the reducing or ceasing of the power supply, towards the target core temperature. This is at least partly due to the residual heat remaining in the cooking chamber from before the power supply was reduced or ceased.
Reducing or ceasing power supply in response to the trigger core temperature being reached may also assist in terms of lessening the risk of the target core temperature of the food being overshot, in other words overcooking of the food.
Moreover, the reducing or ceasing of the power supply to the heating system in this way may help reduce the volume of an overcooked boundary layer of the food, and hence enlarge the volume of the food that is cooked to the desired doneness larger. This may be due to the food absorbing the residual heat in the cooking chamber in a relatively gentle way following reducing or ceasing of the power supply to the heating system.

The control signal signifying completion of cooking of the food, while the power supply to the heating system remains reduced or ceased, is generated in response to the target core temperature being sensed by the food temperature sensor to be reached.

The core temperature sensed by the food temperature sensor may, for example, be the same as the target core temperature, or at least within a tolerance defined in respect of the target core temperature, e.g. within +/-10% of the target core temperature.

In some embodiments, the cooking apparatus comprises a food temperature probe, with the food temperature probe comprising the food temperature sensor.

Such a food temperature probe includes, for example, a sensor-comprising prong that is insertable into the food to enable sensing of the core temperature of the food at an interior of the food where the sensor-comprising prong is inserted.

It is noted that ceasing power supply, as opposed to merely reducing power supply, may assist to reduce energy consumption and/or may assist to lessen the risk of overcooking of the food.

In embodiments in which the controlled power supply to the heating system is reduced (rather than ceased) in response to the trigger core temperature being reached, the reduction in power supply may be implemented by causing a cooking chamber temperature provided by the heating system to be lower compared to a cooking chamber temperature, e.g. a set cooking chamber temperature, employed prior to the trigger core temperature being reached.

In some embodiments, the control signal controls a user output interface to alert a user of the completion of cooking of the food in the cooking chamber.

The user may, for example, be informed by the user output interface of when to remove the food from the cooking chamber.

Alternatively or additionally, the cooking apparatus may include a cooking chamber access mechanism that controls access to the cooking chamber, e.g. via a lid or slidable drawer movable to access the cooking chamber, with the control signal controlling the cooking chamber access mechanism to provide or enable access to the cooking chamber.

In some embodiments, the cooking apparatus comprises an air circulation system. In such embodiments, the controller may be configured to control power supply to the air circulation system to circulate heated air in the cooking chamber until the trigger core temperature is sensed by the food temperature sensor to be reached, and to reduce or cease power supply to the air circulation system in response to the trigger core temperature being sensed by the food temperature sensor to be reached.

The air circulation system may assist with increasing the core temperature of the food to reach the trigger core temperature. By reducing or ceasing power supply to the air circulation system once the trigger core temperature is reached, power consumption may be reduced. The risk of overcooking and/or drying out of the food may also be lessened.

It is noted, more generally, that implicit in the controller's configuration is that the trigger core temperature is set, using the one or more food parameters and/or one or more cooking apparatus-related parameters, to be sufficiently high for the target core temperature to be reached while the power supply to the heating system remains reduced or ceased.

The trigger core temperature may, for example, be set to be sufficiently high for the target core temperature to be reached within the tolerance defined in respect of the target core temperature, following said reduction or ceasing of power supply to the heating system.

In some embodiments, the controller is configured to execute an algorithm configured to set the trigger core temperature to be sufficiently high for the target core temperature to be reached based on the food parameter(s) and/or cooking apparatus-related parameter(s).

In some embodiments, the controller uses a model, for example a regression model, that sets the trigger core temperature using the food parameter(s) and/or cooking apparatus-related parameter(s) as variables in the model. Such a model may include coefficients for each of the variables. Such coefficients may vary according to the target core temperature, in other words desired doneness level.

The coefficients of the model may, for instance, be determined empirically for a given cooking apparatus.

In some embodiments, the one or more food parameters is or are indicative of a type, initial condition, and/or amount of the food.

In some embodiments, the one or more food parameters include(s) one or more of: a number of pieces of the food received in the cooking chamber; a food filling level within the cooking chamber; an initial temperature of the food; a meat type or vegetable type; at least one size dimension of the food; a mass of the food; and a mass per piece of the food.

The initial temperature of the food, which may be regarded as an example of an initial condition of the food, may be room temperature, e.g. 20°C, or refrigerator temperature, e.g. 5°C. The initial temperature of the food may be the food's temperature prior to heating of the cooking chamber by the heating system to heat the food towards the trigger core temperature.

In some embodiments, the initial temperature of the food is received by the controller from the food temperature sensor.

The meat type may include an animal-related meat type, such as chicken, pork, beef, venison, etc. Alternatively or additionally, the meat type may include a cut-related meat type, such as fillet, sirloin or rump.

The at least one size dimension may be a thickness of the food, e.g. a thickness of a piece of the food.

It is noted that the mass of the food or the mass per piece of the food may be used in setting the trigger core temperature, depending on the type/form of food being cooked in the cooking chamber.

Alternatively or additionally, the number of pieces of the food received in the cooking chamber or the food filling level, e.g. of a food support, such as a basket, received in the cooking chamber for supporting the food, may be used in setting the trigger core temperature, depending on the type/form of food being cooked in the cooking chamber.

The food parameter(s) can be received from any suitable input device. In some embodiments, the food parameter(s) is or are received via a user input interface, an optical food detection system, and/or a weighing scale.

The optical food detection system can, for example, include camera(s) arranged to image the food received in the cooking chamber. In such embodiments, the controller may be configured to recognize the food, identify the type, condition and/or estimate the amount of the food by processing image data received from the camera(s).

The user input interface may receive the food parameter(s) in any suitable manner, such as via user-selectable options that enable user-entry of the type, initial condition, and/or amount of the food.

In some embodiments, for example as an alternative or in addition to being used for receiving food parameter(s), such a user input interface is configured to enable user input of an indication of the target core temperature, with the controller being configured to obtain the target core temperature from the indication of the target core temperature.

In embodiments in which the one or more cooking apparatus-related parameters is or are used to set the trigger core temperature, the one or more cooking apparatus-related parameters may include at least one power supply parameter indicative of an amount of power supplied to the heating system to heat the cooking chamber until the trigger core temperature is reached.

The power supply parameter(s), e.g. voltage supplied to the heating system, may facilitate setting of the trigger core temperature.

As an alternative or in addition to the power supply parameter(s), the cooking apparatus-related parameter(s) may include an initial temperature of the cooking chamber prior to heating of the cooking chamber by the heating system that heats the food towards the trigger core temperature.

In some embodiments, and irrespective of whether or how the trigger core temperature is set, the controller is configured to, using the one or more food parameters and/or the one or more cooking apparatus-related parameters, estimate a cooking time required for the target core temperature of the food to be reached.

In some embodiments, the controller is configured to calculate estimations indicative of when the target core temperature of the food will be reached based on core temperature data from the food temperature sensor.

In such embodiments, the controller may be configured to control a user output interface, for example the user output interface that is controlled to alert the user of the completion of cooking of the food in the cooking chamber, to communicate, during cooking of the food, the estimations indicative of when the target core temperature of the food will be reached.

A frequency with which the controller calculates, e.g. and controls the user output interface to communicate, the estimations may increase as the target core temperature is determined, via the core temperature data, to be closer to being reached.

In this way, the user may be kept reliably informed of the cooking time, e.g. how much longer the cooking time is estimated to take.

More generally, the cooking apparatus may include a cooking appliance, which cooking appliance includes the cooking chamber and the heating system.

In embodiments in which the cooking apparatus includes the air circulation system, the air circulation system may be included in the cooking appliance.

The cooking appliance may be a table-top cooking appliance. Such a table-top cooking appliance may be positionable by the user on a table-top or kitchen work-top.

Table-top cooking appliances may be utilized for cooking in a less energy consumptive way. Hence the food temperature sensor-based resting time triggering of the present disclosure may be particularly apposite in the context of a table-top cooking appliance.

Moreover, the heat dissipation characteristics of such a table-top cooking appliance, e.g. an air fryer, have been found to be particularly suitable in the context of the food temperature sensor-based resting time triggering of the present disclosure. This is because heat dissipation to the surroundings in the case of a table-top cooking appliance may be more rapid than in the case of, for instance, a built-in cooking appliance. Thus, the core temperature of the food may increase in a relatively controlled manner towards the target core temperature in the case of the table-top cooking appliance after the power supply to the heating system is reduced or ceased.

The cooking appliance may be a table-top cooking appliance in the form of an air fryer, an air cooker or a food steamer.

When the table-top cooking appliance is an air fryer, the air circulation system and the cooking chamber may be arranged such that, when the cooking appliance is orientated for use, at least part of the air traverses a height of the cooking chamber.

The traversing of the height of the cooking chamber may mean that the at least part of the air passes upwardly and/or downwardly through the cooking chamber.

In other words, this traversing of the height of the cooking chamber may mean upward and/or downward air circulation through food received in the cooking chamber. This may assist to provide a frying effect.

Such a frying effect can enable food to be heated relatively rapidly. Whilst this relatively rapid heating can provide certain benefits, in particular related to minimizing the time required for cooking the food, it can present a greater risk of overcooking the food, in other words heating the food so that the target core temperature is inadvertently exceeded. A further issue may be that, even if the target core temperature is not exceeded, exterior portions of the food, that surround the core of the food, are overdone. These risks may be lessened by the food temperature sensor-based resting time triggering of the present disclosure.

When the table-top cooking appliance is an air cooker, the air circulation system and the cooking chamber may be arranged to circulate heated air laterally across and through food received in the cooking chamber, with the heated air being laterally directed towards side portion(s) of the cooking chamber.

According to another aspect there is provided a method of operating a cooking apparatus, the cooking apparatus comprising a cooking chamber for receiving food, a heating system for heating the cooking chamber, and a food temperature sensor for sensing a core temperature of the food, the method comprising: receiving a target core temperature to which the food is to be heated; receiving one or more food parameters and/or one or more cooking apparatus-related parameters; setting a trigger core temperature that is lower than the target core temperature using the one or more food parameters and/or one or more cooking apparatus-related parameters; controlling power supply to the heating system such that the heating system heats the cooking chamber until the trigger core temperature of the food is sensed by the food temperature sensor to be reached; reducing or ceasing said controlled power supply to the heating system in response to the trigger core temperature being sensed by the food temperature sensor to be reached; and generating a control signal signifying completion of cooking of the food in the cooking chamber, while the power supply to the heating system remains reduced or ceased, when the target core temperature is sensed by the food temperature sensor to be reached.

Implicit in this method is that the trigger core temperature is set, using the one or more food parameters and/or one or more cooking apparatus-related parameters, to be sufficiently high for the target core temperature to be reached while the power supply to the heating system remains reduced or ceased.

The one or more food parameters and the one or more cooking apparatus-related parameters may be as described above in relation to the cooking apparatus.

Alternatively or additionally, the method comprises estimating, using the one or more food parameters and/or the one or more cooking apparatus-related parameters, a cooking time required for the target core temperature of the food to be reached.

Alternatively or additionally, the method comprises calculating, during cooking of the food, estimations indicative of when the target core temperature of the food will be reached based on data from the food temperature sensor.

In such embodiments, the method may comprise controlling a user output interface, for example a user output interface that is controlled to alert the user of the completion of cooking of the food in the cooking chamber, to communicate, during cooking of the food, the estimations indicative of when the target core temperature of the food will be reached.

A frequency with which the estimations are calculated, e.g. and communicated via the user output interface, may increase as the target core temperature is determined, via the core temperature data, to be closer to being reached.

Alternatively or additionally, the method may comprise controlling power supply to the air circulation system to circulate heated air in the cooking chamber until the trigger core temperature is reached, and reducing or ceasing power supply to the air circulation system in response to the trigger core temperature being reached.

According to a further aspect there is provided a computer program comprising computer program code which, when executed on a computing device having one or more processors, causes the one or more processors to perform all of the steps of the method according to any of the embodiments described herein.

The one or more processor(s) may, for example, be included in the controller according to any of the embodiments described herein.

One or more non-transitory computer readable media may be provided, which non-transitory computer readable media have a computer program stored thereon, with the computer program comprising computer program code which is configured, when the computer program is run on the one or more processors, to cause the one or more processors to implement the method according to any of the embodiments described herein.

More generally, embodiments described herein in relation to the method of operating a cooking apparatus may be applicable to the cooking apparatus and to the computer program, embodiments described herein in relation to the

5

cooking apparatus may be applicable to the method and computer program, and embodiments described herein in relation to the computer program may be applicable to the method and the cooking apparatus.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

FIG. 1 schematically depicts a cooking apparatus according to an example;
FIG. 2 provides graphs of food core temperature and heater power vs time;
FIG. 3 provides a graph of food core temperature vs time according to another example;
FIG. 4 provides a graph of measured core temperature/target core temperature vs time step between cooking time estimations; and
FIG. 5 provides a flowchart of a method according to an example.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a system for controlling a cooking apparatus, which cooking apparatus comprises a cooking chamber and a heating system. The system comprises a controller configured to receive a target core temperature to which food received in the cooking chamber is to be heated. The controller controls power supply to the heating system such that the heating system heats the cooking chamber until a trigger core temperature of the food sensed by a food temperature sensor is reached. The controller then reduces or ceases power supply to the heating system in response to the trigger core temperature being reached. The trigger core temperature is lower than the target core temperature. Further provided is a related method and computer program.

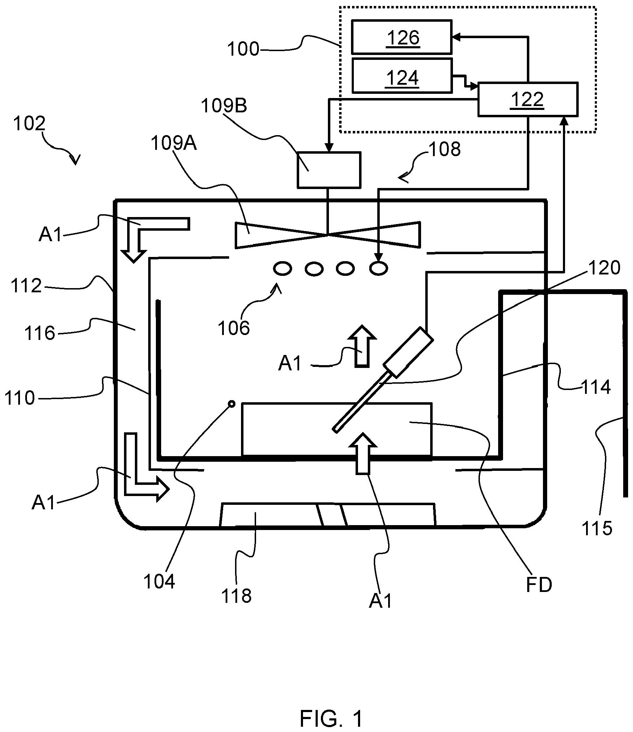

FIG. 1 schematically depicts a system 100 for controlling a cooking apparatus 102, which cooking apparatus 102 comprises a cooking chamber 104 and a heating system 106.

In some embodiments, such as shown in FIG. 1, the cooking apparatus 102 also includes an air circulation system 108. Such an air circulation system 108 may circulate air heated by the heating system 106.

In some embodiments, such as shown in FIG. 1, the heating system 106 is arranged to irradiate food FD received in the cooking chamber 104, as well as heating air that is circulated by the air circulation system 108.

The heating system 106 can have any suitable design. In some embodiments, the heating system 106 comprises a heating element, such as a resistive heating element. Particular mention is made of a spiral resistive heating element being included in the heating system 106. Air can, for example, be circulated by the air circulation system 108 through space(s) between coils of such a spiral resistive heating element in order to heat the air. Such coils are schematically depicted in FIG. 1.

A chamber temperature sensor (not visible) may sense a temperature of the cooking chamber 104. The heating system 106 may be controlled at least partly based on input from the chamber temperature sensor. For example, the input from the chamber temperature sensor may be used so that the heating system 106 provides a set, e.g. user-selected, cooking chamber temperature.

Any suitable type of temperature sensor can be employed for the chamber temperature sensor. In some embodiments, the chamber temperature sensor comprises, e.g. is defined by, a thermistor, such as negative temperature coefficient (NTC) thermistor.

In at least some embodiments, the air circulation system 108 comprises a fan 109A and a motor 109B, with rotation of the fan 109A by the motor 109B causing the circulating of air.

In some embodiments, such as shown in FIG. 1, the cooking apparatus 102 includes a cooking appliance, which cooking appliance includes the cooking chamber 104 and the heating system 106.

In embodiments in which the cooking apparatus 102 includes the air circulation system 108, the air circulation system 108 may be included in the cooking appliance.

In some embodiments, such as shown in FIG. 1, the cooking appliance may be a table-top cooking appliance. Such a table-top cooking appliance may be positionable by the user on a table-top or kitchen work-top.

Table-top cooking appliances may be utilized for cooking in a less energy consumptive way. Moreover, the heat dissipation characteristics of such a table-top cooking appliance have been found to be particularly suitable in the context of the heating system control explained herein below. Examples of table-top cooking appliances include an air fryer, as shown in FIG. 1, an air cooker, and a food steamer.

It is noted that an air cooker may be distinguished from an air fryer by a direction of airflow through the cooking chamber 104. In an air cooker, the air circulation system 108 may be arranged to circulate heated air laterally across and through food FD received in the cooking chamber 104, with the heated air being laterally directed towards side portion(s) of the cooking chamber 104. In an air fryer, the air circulation system 108 and the cooking chamber 104 may be arranged such that, when the cooking appliance is orientated for use, at least part of the heated air traverses a height of the cooking chamber 104. An example of this is described in more detail herein below.

In some embodiments, such as shown in FIG. 1, the cooking chamber 104 is at least partly delimited by a cooking chamber wall 110. The cooking apparatus 102, e.g. the cooking appliance, may also include an outer chamber wall 112.

The cooking apparatus 102, e.g. the cooking appliance, may include a casing (not visible in the Figures), for example a plastic casing, in which the cooking chamber wall 110 is arranged. In embodiments in which the outer chamber wall 112 is included in the cooking apparatus 102, the outer chamber wall 112 may also be received within the casing.

The cooking apparatus 102, e.g. cooking appliance, may comprise a drawer that is slidable to provide access to the cooking chamber 104. Alternatively, a lid may be moveable, e.g. by lifting, to enable the cooking chamber 104 to be accessed. Such a moveable lid may, for example, be pivotally mounted so that pivoting of the lid enables the cooking chamber 104 to be accessed.

The cooking apparatus 102, e.g. cooking appliance, may include a food support 114 for supporting the food FD at least when the food FD is received in the cooking chamber 104.

The food support 114 may comprise, e.g. be in the form of, a basket that is receivable in the cooking chamber 104, and/or whose wall(s) are included in the cooking chamber wall 110.

Aperture(s) defined in the base of the food support 114, e.g. basket, may permit heated air to pass therethrough.

The food support 114, e.g. basket, may be attached to a handle 115. The handle 115 may enable the user to manipulate the food support 114, for example to flip the food FD and/or to separate the food support 114 from the rest of the cooking appliance.

The food support 114, e.g. basket, may, for example, be included in the drawer that is slidable to provide access to the cooking chamber 104.

In some embodiments, such as shown in FIG. 1, the outer chamber wall 112 is arranged around an outside of the cooking chamber wall 110, with a duct 116 being defined between the outer chamber wall 112 and the cooking chamber wall 110.

The air circulation system 108 may be arranged to circulate at least part of the air heated by the heating system 106 around the duct 116, into and through the cooking chamber 104, and back into the duct 116.

In such embodiments, the duct 116 may be arranged to fluidly connect a top and a bottom of the cooking chamber 104 to each other such that the circulating at least part of the heated air passing through the cooking chamber 104 traverses the height of the cooking chamber 104.

In some embodiments, such as shown in FIG. 1, the heated air passes upwardly through the cooking chamber 104. Airflow around the duct 116 and upwardly through the cooking chamber 104 is represented by arrows A1 in FIG. 1.

In some embodiments, such as shown in FIG. 1, the cooking apparatus 102, e.g. the cooking appliance in the form of an air fryer, comprises an air guiding element 118 arranged to direct the heated air delivered thereto by the air circulation system 108 towards the food support 114, for example towards an underside of the food support 114.

In embodiments in which the cooking apparatus 102 includes the duct 116, the air guiding element 118 is preferably arranged in the duct 116, e.g. beneath the cooking chamber 104, as shown in FIG. 1.

The air guiding element 118 may, for example, comprise a so-called star-fish shape. The star-fish shape comprises a plurality of radial fins which are shaped to guide air in the duct 116 towards the food support 114, for example towards the underside of the food support 114.

The air guiding element 118 may guide air from the duct 116 towards the fan 109A and/or the heating element of the heating system 106, e.g. in addition to the air guiding element 118 directing air towards the food support 114.

More generally, the traversing of the height of the cooking chamber 104 may mean that the at least part of the heated air passes upwardly and/or downwardly through the cooking chamber 104. In other words, this traversing of the height of the cooking chamber 104 may mean upward and/or downward heated air circulation through the food FD received in the cooking chamber 104. This may assist to provide a frying effect.

Such a frying effect can enable the food FD to be heated relatively rapidly. Whilst this relatively rapid heating can provide certain benefits, in particular related to minimizing the time required for cooking the food FD, it can present a greater risk of overcooking the food FD, in other words heating the food FD so that the desired core temperature, in other words target core temperature, of the food FD is inadvertently exceeded. A further issue may be that, even if the target core temperature is not exceeded, exterior portions of the food FD, that surround the core of the food FD, are overdone.

In the case of conventional cooking appliances, e.g. air fryers, food FD may be cooked to a defined core temperature with the heating system 106, e.g. the heating element of the heating system 106, being continually controlled to heat the cooking chamber 104. Whilst this may achieve an optimal core temperature, an outer surface of the food FD may risk being overcooked. For example, a desired result is achieved inside a steak, but outside areas of the steak may be dry, dark or even charred. In such an example, a volume of steak cooked to the desired doneness level, e.g. medium, may be relatively small, while a relatively thick boundary layer/exterior portion may be present where the steak is overdone.

Thus, when using such conventional cooking appliances, a desirable cooking result in which the target core temperature is achieved but without outer areas being overdone tends only to be achievable by the user exercising discretion/using personal cooking experience. This may involve the user manually removing the food FD from the cooking chamber 104.

FIG. 1 shows a food temperature sensor 120 for sensing a core temperature of the food FD. Such a food temperature sensor 120 may be insertable into the food FD received in the cooking chamber 104 in order to sense a core temperature of the food FD during cooking within the cooking chamber 104.

The food temperature sensor 120 may be included in a food temperature probe, e.g. in a prong of such a food temperature probe, that is insertable into the food FD received in the cooking chamber 104.

The food temperature sensor 120 may be included in the cooking apparatus 102, e.g. as part of the cooking appliance, and/or in the system 100.

A controller 122 controls at least the heating system 106 of the cooking apparatus 102. The food temperature sensor 120 may be connected to the controller 122 in any suitable manner, such as via a wire extending from within the cooking chamber 104 to the controller 122 arranged outside the cooking chamber 104. Alternatively or additionally, data from the food temperature sensor 120 may be communicated via a wireless link to the controller 122.

More generally, the controller 122 is configured to receive a target core temperature to which the food FD is to be heated, e.g. corresponding to a user-selected doneness level, such as rare, medium, well-done, etc.

In some embodiments, the controller 122 obtains the target core temperature from an indication of the target core temperature inputted by a user via a user input interface 124.

In some embodiments, the user input interface 124 is included in the system 100 and/or is included in the cooking appliance.

As an alternative or in addition to the user input interface 124 being included in the cooking appliance, the user input interface 124 may be included in an external device, e.g. a smart phone or tablet computer, that is separate from the cooking appliance.

The user input interface 124 can be implemented in any suitable manner. For example, the user input interface 124 comprises one or more buttons, a microphone, and/or touch input functionality of a touchscreen. Such a touchscreen can, for example, be included in the cooking appliance and/or in the external device, e.g. smart phone or tablet computer.

The controller 122 controls power supply to the heating system 106 such that the heating system 106 heats the cooking chamber 104 until a trigger core temperature of the food FD sensed by the food temperature sensor 120 is reached. The controller 122 then reduces or ceases power supply to the heating system 106 in response to the trigger core temperature being reached. The trigger core temperature is lower than the target core temperature.

There may be various advantages to reducing or ceasing the power supply to the heating system 106 in response to the core temperature of the food, as sensed using the food temperature sensor 120, reaching the trigger core temperature that is lower than the target core temperature to which the food FD is intended to be heated. The core temperature of the food FD may continue to increase, in spite of the reducing or ceasing of the power supply, towards the target core temperature. This may be at least partly due to residual heat remaining in the cooking chamber 104 from before the power supply was reduced or ceased.

This reducing or ceasing of the power supply to the heating system 106 has been found to alleviate the above-described issue of the cooked food FD having a relatively thick overcooked boundary layer. In other words, the reducing or ceasing of the power supply to the heating system 106 has been found to help reduce the volume of such a boundary layer, and hence enlarge the volume of the food FD cooked to the desired doneness. This may be due to the food FD, e.g. steak, absorbing the residual heat in the cooking chamber 104 in a relatively gentle way following reducing or ceasing of the power supply to the heating system 106.

The cooking of the food FD may also be implemented in a more energy-efficient manner, since the core temperature of the food FD as measured using the food temperature sensor 120 can assist in making appropriate use of residual heat in the cooking chamber 104 to continue cooking the food FD following reduction or cessation of power supply to the heating system 106.

Moreover, reducing or ceasing power supply in response to the trigger core temperature being reached may also assist in terms of lessening the risk of the target core temperature of the food FD being overshot, in other words overcooking of the food FD.

It is noted that ceasing power supply, as opposed to merely reducing power supply, to the heating system 106 may assist to reduce energy consumption and/or may assist to lessen the risk of overcooking of the food.

It is further noted that the heat dissipation characteristics of table-top cooking appliances, e.g. air fryers, have been found to be particularly suitable in the context of this food temperature sensor-based resting time triggering. This is because heat dissipation to the surroundings in the case of a table-top cooking appliance may be more rapid than in the case of, for instance, a built-in cooking appliance. Thus, the core temperature of the food FD may increase in a relatively controlled manner towards the target core temperature in the case of the table-top cooking appliance after the power supply to the heating system 106 is reduced or ceased.

The control exerted by the controller 122 over the heating system 106 is schematically represented in FIG. 1 by an arrow extending between the controller 122 and the heating element of the heating system 106.

In some embodiments, such as shown in FIG. 1, the controller 122 is configured to control power supply to the air circulation system 108 to circulate heated air in the cooking chamber 104 until the trigger core temperature is reached, and to reduce or cease power supply to the air circulation system 108 in response to the trigger core temperature being reached. This control is schematically represented in FIG. 1 by an arrow extending between the controller 122 and the motor 109B of the air circulation system 108.

The air circulation system 108 may assist with increasing the core temperature of the food FD to reach the trigger core temperature. By reducing or ceasing power supply to the air circulation system 108 once the trigger core temperature is reached, power consumption may be reduced. The risk of overcooking and/or drying out of the food FD may also be lessened.

In at least some embodiments, the controller 122 generates a control signal signifying completion of cooking of the food FD in the cooking chamber 104, while the power supply remains reduced or ceased, based on a subsequent core temperature of the food FD sensed by the food temperature sensor 120. The subsequent core temperature is higher than the trigger core temperature due to the above-described continuation of cooking of the food FD following reduction or cessation of power supply to the heating system 106.

In some embodiments, the control signal controls a user output interface 126 to alert a user of the completion of cooking of the food FD in the cooking chamber 104.

The user may, for example, be informed by the user output interface 126 of when to remove the food FD from the cooking chamber 104.

In some embodiments, the user output interface 126 is included in the system 100 and/or is included in the cooking appliance.

As an alternative or in addition to the user output interface 126 being included in the cooking appliance, the user output interface 126 may be included in the external device, e.g. smart phone or tablet computer, that is separate from the cooking appliance.

The user output interface 126 can be implemented in any suitable manner. For example, the user input interface 126 comprises an optical output element, such as a display, and/or a loudspeaker. The display can, for example, be included in a touchscreen, e.g. a touchscreen included in the cooking appliance and/or in the external device, e.g. smart phone or tablet computer.

As an alternative or in addition to the control signal controlling the user output interface 126, the control signal may control a cooking chamber access mechanism to provide or enable access to the cooking chamber 104, e.g. by unlocking and/or causing movement of the lid or slidable drawer to access the cooking chamber 104.

It is noted, more generally, that the subsequent core temperature may be the same as the target core temperature, or at least within a tolerance defined in respect of the target core temperature, e.g. within +/-10% of the target core temperature. Alternatively, the subsequent core temperature may be less than the target core temperature but correspond to a plateau of the core temperature while the power supply remains reduced or ceased.

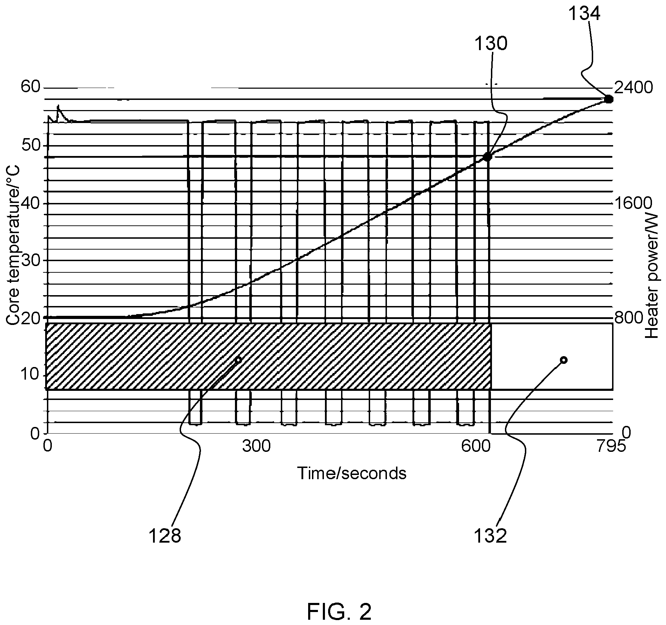

FIG. 2 provides graphs of food core temperature and heater power vs time for an illustrative non-limiting example of a cooking process comprising a cooking phase 128 in which power is supplied to the heating system 106 such that the heating system 106 heats the cooking chamber 104 until the trigger core temperature 130 of the food FD, in this particular example beef steak, as sensed by the food temperature sensor 120 is reached.

The controller 122 may be configured to control power supply to the heating system 106 in the cooking phase 128 based on input from the chamber temperature sensor, e.g. NTC thermistor, to provide the set, e.g. user-selected, cooking chamber temperature.

This control of the heating system 106 can be seen in FIG. 2 by the power supply to the heating system/heater 106 toggling between a higher power level, in this particular example 2160 W, and a lower power level, in this particular example 80 W.

With continued reference to the non-limiting example graphically presented in FIG. 2, the cooking phase 128 is followed by a resting phase 132 in which power supply to the heating system 106 is ceased. The core temperature of the food FD continues to increase during the resting phase 132, in this case so that core temperature of the food FD reaches the target core temperature 134.

It is noted that in embodiments in which the controlled power supply to the heating system 106 is reduced (rather than ceased) in response to the trigger core temperature 130 being reached, the reduction in power supply may be implemented by decreasing the set cooking chamber temperature compared to that employed during the cooking phase 128. This may involve, for instance, decreasing the frequency of adoption of the higher power level and/or a magnitude of the higher power level.

It is noted that while only one cooking phase 128 is shown in FIG. 2, this should not be regarded as being limiting and more than one cooking phase 128, e.g. in which different set cooking chamber temperatures are used in the respective cooking phases 128, may be implemented prior to a resting phase 132 in which power supply to the heating system 106 is ceased.

The cooking process according to the present disclosure accordingly cooks the food FD using a minimum of one cooking phase 128 followed by one resting phase 132.

The switching from the (last) cooking phase 128 to the resting phase 132 is triggered by the trigger core food temperature 130 being reached.

More generally, the entire cooking process may be controlled to take place automatically in the closed cooking appliance, e.g. in the cooking appliance while the cooking chamber 104 is closed, using a predefined program.

In some embodiments, the controller 122 is configured to, using one or more food parameters and/or one or more cooking apparatus-related parameters, set the trigger core temperature 130 to be sufficiently high for the target core temperature 134 to be reached while the power supply to the heating system 106 remains reduced or ceased.

In such embodiments, the trigger core temperature 130 may be set to be sufficiently high for the target core temperature 134 to be reached within the tolerance defined in respect of the target core temperature 134, following the reduction or ceasing of power supply to the heating system 106.

In some embodiments, the controller 122 is configured to execute an algorithm configured to set the trigger core temperature 130 to be sufficiently high for the target core temperature 134 to be reached based on the food parameter(s) and/or cooking apparatus-related parameter(s).

In some embodiments, the controller 122 uses a model, for example a regression model, that sets the trigger core temperature 130 using the food parameter(s) and/or cooking apparatus-related parameter(s) as variables in the model. Such a model may include coefficients for each of the variables. Such coefficients may vary according to the target core temperature 134, in other words desired doneness level.

The coefficients of the model may, for instance, be determined empirically for a given cooking apparatus 102.

Alternative ways of setting the trigger core temperature 130 to be sufficiently high for the target core temperature 134 to be reached can also be contemplated, for example by extrapolating core temperature data received from the food temperature sensor 120, for example taking into account a rate of temperature decrease of the cooking chamber 104 following reduction or ceasing of the power supply to the heating system 106, and, in some embodiments, reduction or ceasing of the power supply to the air circulation system 108.

In embodiments in which the one or more food parameters is or are used to set the trigger core temperature 130, the one or more food parameters may be indicative of a type, initial condition, and/or amount of the food FD.

In some embodiments, the one or more food parameters include(s) one or more of: a number of pieces of the food FD received in the cooking chamber 104; a food filling level within the cooking chamber 104, such as a food filling level of the food support 114, e.g. basket; an initial temperature of the food FD; a meat type or vegetable type; at least one size dimension of the food FD; a mass of the food FD; and a mass per piece of the food FD.

The initial temperature of the food FD, which may be regarded as an example of an initial condition of the food FD, may be room temperature, e.g. 20°C, or refrigerator temperature, e.g. 5°C. The initial temperature of the food FD may be the food's FD temperature prior to heating of the cooking chamber 104 by the heating system 106 to heat the food FD towards the trigger core temperature 130.

In some embodiments, the initial temperature of the food FD is received by the controller 122 from the food temperature sensor 120.

The meat type may include an animal-related meat type, such as chicken, pork, beef, venison, etc. Alternatively or additionally, the meat type may include a cut-related meat type, such as fillet, sirloin or rump.

The at least one size dimension may be a thickness of the food FD, e.g. a maximum thickness of a piece of the food FD.

It is noted that the mass of the food FD or the mass per piece of the food FD may be used in setting the trigger core temperature 130, depending on the type/form of food FD being cooked in the cooking chamber 104.

Alternatively or additionally, the number of pieces of the food FD received in the cooking chamber 104 or the food filling level, e.g. of the food support 114, such as a basket, received in the cooking chamber 104 for supporting the food FD, may be used in setting the trigger core temperature 130, depending on the type/form of food FD being cooked in the cooking chamber 104.

The food parameter(s) can be received from any suitable input device. In some embodiments, the food parameter(s) is or are received via the user input interface 124, an optical food detection system (not visible in the Figures), and/or a weighing scale (not visible in the Figures).

The optical food detection system can, for example, include camera(s) arranged to image the food FD received in the cooking chamber 104. In such embodiments, the controller 122 may be configured to recognize the food FD, identify the type, condition and/or estimate the amount of the food FD by processing image data received from the camera(s).

The user input interface 124 may receive the food parameter(s) in any suitable manner, such as via user-selectable options that enable user-entry of the type, initial condition, and/or amount of the food FD. Such user-selectable options may, for instance, be selectable via buttons, and/or a touchscreen of user input interface 124.

The one or more cooking apparatus-related parameters may include at least one power supply parameter indicative of an amount of power supplied to the heating system 106 to heat the cooking chamber 104 until the trigger core temperature 130 is reached.

The power supply parameter(s), e.g. voltage supplied to the heating system 106, may facilitate setting of the trigger core temperature 130.

As an alternative or in addition to the power supply parameter(s), the cooking apparatus-related parameter(s) may include an initial temperature of the cooking chamber 104 prior to heating of the cooking chamber 104 by the heating system 106 to heat the food towards the trigger core temperature 130.

In such embodiments, the trigger core temperature 130 may be a function of the food parameter(s) and/or cooking apparatus-related parameter(s). For example:

Trigger core temperature = f(param_U1, param_U2, param_U3, param_D1, param_D2, param_D3)
where:

param_U1 is a filling level of the food support 114, e.g. basket, or number of pieces of food FD, depending on the food item;
param_U2 is a mass of the food FD; or a mass per piece of the food FD, depending on the food item;
param_U3 is a thickness of the food FD;
param_D1 is a voltage supplied to the heating system 106;
param_D2 is a device start temperature, e.g. an initial temperature of the cooking chamber 104 prior to heating of the cooking chamber 104 by the heating system 106; and
param_D3 is a food start temperature, e.g. an initial temperature of the food FD prior to heating of the cooking chamber 104 by the heating system 106.

In some embodiments, the following formula is used to set the trigger core temperature 130:

$$
\begin{aligned}
\text{Trigger core temperature} = {} & A + B(\text{param\_U1}) + C(\text{param\_U2}) + D(\text{param\_U3}) \\
& + E(\text{param\_D1}) + F(\text{param\_D2}) + G(\text{param\_D3}) + H(\text{param\_U1})^2 + I(\text{param\_U2})^2 + \\
& J(\text{param\_U3})^2 + K(\text{param\_D1})^2 + L(\text{param\_D2})^2 + M(\text{param\_D3})^2 + \\
& N(\text{param\_U1})(\text{param\_U2}) + O(\text{param\_U1})(\text{param\_U3}) + P(\text{param\_U1})(\text{param\_D1}) + \\
& Q(\text{param\_U1})(\text{param\_D2}) + R(\text{param\_U1})(\text{param\_D3}) + S(\text{param\_U2})(\text{param\_U3}) + \\
& T(\text{param\_U2})(\text{param\_D1}) + U(\text{param\_U2})(\text{param\_D2}) + V(\text{param\_U2})(\text{param\_D3}) + \\
& W(\text{param\_U3})(\text{param\_D1}) + X(\text{param\_U3})(\text{param\_D2}) + Y(\text{param\_U3})(\text{param\_D3}) + \\
& Z(\text{param\_D1})(\text{param\_D2}) + A1(\text{param\_D1})(\text{param\_D3}) + B1(\text{param\_D2})(\text{param\_D3})
\end{aligned}
$$

where param_U1, param_U2, param_U3, param_D1, param_D2 and param_D3 have the meanings explained above, and A to Z, A1 and B1 are coefficients.

The above formula may be used to determine the trigger core temperature 130 for each target core temperature 134, in other words doneness level, but with the coefficients varying between the doneness levels.

Values for the coefficients may be determined in a routine manner for a given cooking apparatus 102, noting that a success criterion is that the trigger core temperature 130 is sufficiently high for the target core temperature 134 to be reached.

In some embodiments, the controller 122 is configured to, using the one or more food parameters and/or the one or more cooking apparatus-related parameters, estimate a cooking time required for the target core temperature 134 of the food FD to be reached.

In such embodiments, the cooking time may be a function of the food parameter(s) and/or cooking apparatus-related parameter(s), for example:

Estimated total cooking time = f(param_U1, param_U2, param_U3, param_D1, param_D2, param_D3) where param_U1, param_U2, param_U3, param_D1, param_D2 and param_D3 have the meanings explained above.

For example, the following formula may be used to estimate the total cooking time:

$$
\begin{aligned}
\text{Estimated total cooking time} = {} & A' + B'(\text{param\_U1}) + C'(\text{param\_U2}) + \\
& D'(\text{param\_U3}) + E'(\text{param\_D1}) + F'(\text{param\_D2}) + G'(\text{param\_D3}) + H'(\text{param\_U1})^2 + \\
& I'(\text{param\_U2})^2 + J'(\text{param\_U3})^2 + K'(\text{param\_D1})^2 + L'(\text{param\_D2})^2 + M'(\text{param\_D3})^2 + \\
& N'(\text{param\_U1})(\text{param\_U2}) + O'(\text{param\_U1})(\text{param\_U3}) + P'(\text{param\_U1})(\text{param\_D1}) + \\
& Q'(\text{param\_U1})(\text{param\_D2}) + R'(\text{param\_U1})(\text{param\_D3}) + S'(\text{param\_U2})(\text{param\_U3}) + \\
& T'(\text{param\_U2})(\text{param\_D1}) + U'(\text{param\_U2})(\text{param\_D2}) + V'(\text{param\_U2})(\text{param\_D3}) + \\
& W'(\text{param\_U3})(\text{param\_D1}) + X'(\text{param\_U3})(\text{param\_D2}) + Y'(\text{param\_U3})(\text{param\_D3}) + \\
& Z'(\text{param\_D1})(\text{param\_D2}) + A1'(\text{param\_D1})(\text{param\_D3}) + B1'(\text{param\_D2})(\text{param\_D3})
\end{aligned}
$$

where param_U1, param_U2, param_U3, param_D1, param_D2 and param_D3 have the meanings explained above, and A' to Z', A1' and B 1' are coefficients.

Values for the coefficients may be determined in a routine manner for a given cooking apparatus 102, noting that a success criterion is that the total cooking time estimated using the formula is within 10% of the actual time required for the target core temperature 134 to be reached.

In some embodiments, the controller 122 is configured to calculate, during cooking of the food FD, estimations indicative of when the target core temperature 134 of the food FD will be reached, e.g. based on data from the food temperature sensor 120.

Such estimations may be re-calculations of the cooking time, e.g. re-calculations of the total cooking time as estimated using the one or more food parameters and/or the one or more cooking apparatus-related parameters.

Such re-calculations may be performed because the initial estimation of the cooking time, e.g. the total cooking time estimated using the one or more food parameters and/or the one or more cooking apparatus-related parameters, may be a relatively rough estimation, for example within about +/-10% of the actual time required for the target core temperature 134 to be reached.

If the remaining cooking time is communicated, e.g. displayed, via the user output interface 126, while the cooking is being controlled via data being received from the food temperature sensor 120, the remaining cooking time may be misleading.

For example, the remaining cooking time communicated via the user output interface 126 may show that cooking of the food FD is complete but the target core temperature 134 may not yet have been reached. Alternatively, the remaining cooking time communicated via the user output interface 126 may indicate that cooking time is remaining but the target core temperature 134 may have already been reached. Hence re-calculation of the cooking time may beneficially synchronize the remaining cooking time communicated via the user output interface 126 with the actual cooking progress as measured using the food temperature sensor 120.

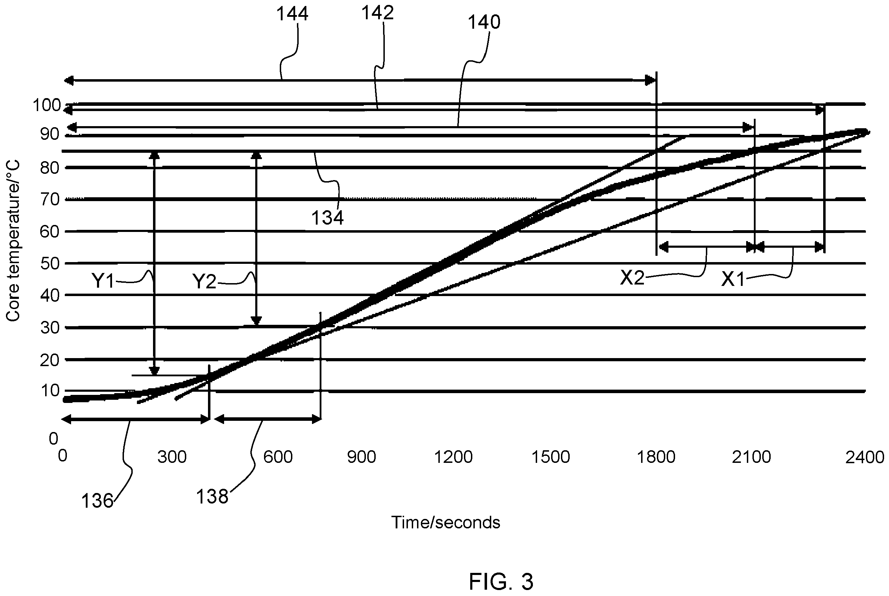

The graph provided in FIG. 3 represents a typical core temperature profile. At the beginning of the cooking process, the slope of the graph is relatively shallow. This means that a time delay 136 is preferably provided between the start of the cooking process and the first re-calculation/estimation during the cooking process. This time delay 136 may assist to reduce the risk of the initial re-calculation significantly overestimating how much cooking time is remaining due to the initial shallow slope of the core temperature profile.

In some embodiments, the first re-calculation of the cooking time is delayed by a time delay 136 whose duration is between 0.1 and 0.4 multiplied by the cooking time, e.g. between 0.1 and 0.4 multiplied by the total cooking time as estimated using the one or more food parameters and/or the one or more cooking apparatus-related parameters.

Alternatively or additionally, a time step 138 between consecutive estimations/re-calculations may have a duration between 0.1 and 0.4 multiplied by the total cooking time estimated using the one or more food parameters and/or the one or more cooking apparatus-related parameters.

In some embodiments, during a given period of time, e.g. 1 minute, prior to each re-calculation, data from the food temperature sensor 120 is used to calculate the slope of the core temperature profile. This slope is then used, following elapse of the time delay 136 or time step 138, to calculate, together with the difference between the target core temperature 134 and the actual core temperature measured at that point by the food temperature sensor 120, the estimated time to reach the target core temperature 134.

The change in time to reach the target core temperature 134 may be equal to the difference between the target core temperature 134 and the actual core temperature measured at that point divided by the slope, e.g. the slope determined in the given time period, such as 1 minute, prior to that point. This may be communicated via the user output interface 126 as the new/re-calculated end time of the cooking process.

Referring again to FIG. 3, the double-headed arrow 140 denotes the total cooking time estimated for a given target core temperature 134, in this case 85°C, using the one or more food parameters and/or the one or more cooking apparatus-related parameters, the double-headed arrow 142 denotes a first estimated/re-calculated cooking time determined following the time delay 136, and the double-headed arrow 144 denotes a second estimated/re-calculated cooking time determined following the time step 138.

Y1 in FIG. 3 denotes the difference between the target core temperature 134 and the actual core temperature measured at the point of the first re-calculation. The relatively shallow slope of the core temperature profile at this early stage of the cooking process means that a longer cooking time is estimated than that estimated using the one or more food parameters and/or the one or more cooking apparatus-related parameters, with this difference in the respective estimations being represented in FIG. 3 by X1.

Y2 in FIG. 3 denotes the difference between the target core temperature 134 and the actual core temperature measured at the point of the second re-calculation. The steeper slope of the core temperature profile at this stage of the cooking process means that a shorter cooking time is estimated than that estimated using the one or more food parameters and/or the one or more cooking apparatus-related parameters, with this difference in the respective estimations being represented in FIG. 3 by X2.

Thus, changes in the slope of the core temperature profile at relatively early stages of the cooking process, when the difference between the target core temperature 134 and the actual core temperature, are relatively large can lead to some fluctuation in the recalculated cooking time.

Hence in an alternative approach to implementing the estimations/re-calculations of the cooking time, a frequency with which the controller 122 estimates and communicates the estimations may increase as the target core temperature 134 is determined, via the core temperature measured by the food temperature sensor 120, to be closer to being reached.

In other words, a form of weighting factor may be used that reduces the duration of the time steps 138 between consecutive re-calculations as the difference between the target core temperature 134 and the actual core temperature becomes smaller.

In this way, the user may be kept reliably informed of the cooking time, e.g. how much longer the cooking time is estimated to take.

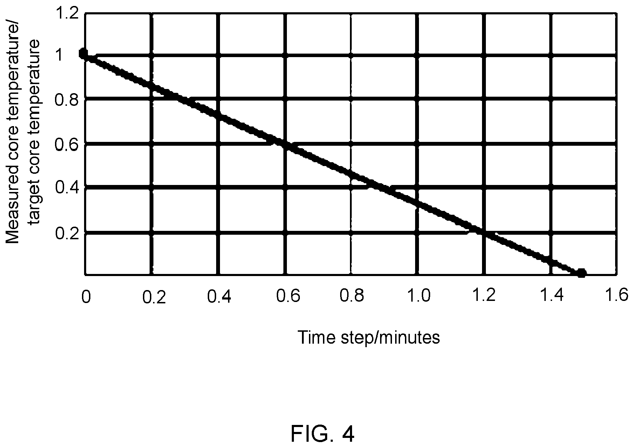

In some embodiments, and referring to FIG. 4, a negative correlation may be defined between a length of the time step 138 between consecutive estimates/re-calculations of when the target core temperature 134 of the food FD will be reached and a ratio corresponding to the measured actual core temperature divided by the target core temperature 134.

In embodiments, such as shown in FIG. 4, in which the ratio is equal to the actual core temperature divided by the target core temperature 134, the end of the cooking process may be determined to have been reached, for example the end of the resting phase 132 may be determined to have been reached, when the target core temperature 134 and the actual core temperature are equal to each other.

In such embodiments, the control signal signifying completion of cooking of the food FD in the cooking chamber 104 may be generated based on the target core temperature 134 and the actual core temperature being equal to each other.

In summary, with the food parameter(s) and/or cooking apparatus-related parameter(s) input mentioned above the total cooking time, including the cooking phase 128 and the resting phase 132, can be estimated at the beginning, e.g. before initiating, the cooking process to inform the user of how much time the cooking process will take. This total cooking time estimation can be updated/re-calculated during the cooking process based on the measurement data from the food temperature sensor 120 inserted into the food FD.

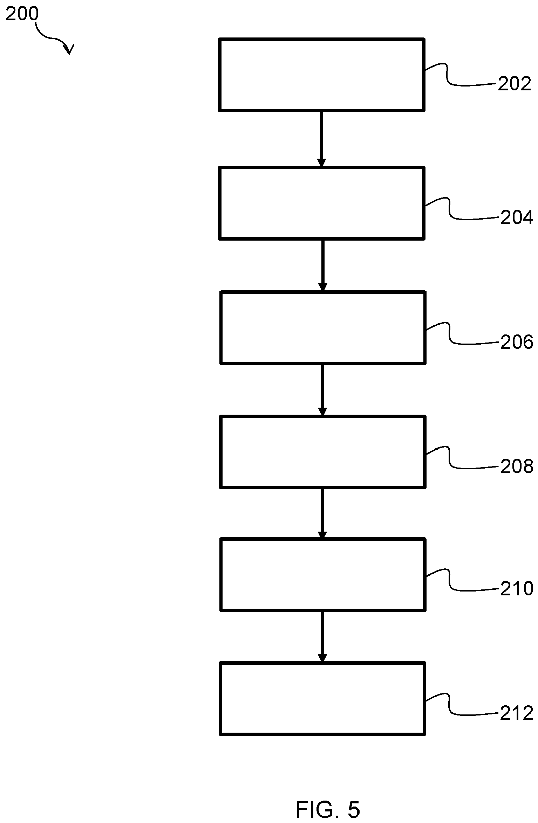

FIG. 5 provides a flowchart of a method 200 of operating a cooking apparatus 102 according to an example. The cooking apparatus 102 operated in the method 200 includes a cooking chamber 104, a heating system 106, and a food temperature sensor 120 for sensing a core temperature of the food FD received in the cooking chamber 104. The cooking apparatus 102 may be according to any of the embodiments described herein.

The method 200 comprises receiving 202 a target core temperature 134 to which the food FD is to be heated. Such a target core temperature 134 may be received from a user input interface 124, as previously described.

One or more food parameters and/or one or more cooking apparatus-related parameters are received in step 204, and a trigger core temperature 130 that is lower than the target core temperature 134 is set in step 206 using the one or more food parameters and/or one or more cooking apparatus-related parameters.

Power supply to the heating system 106 is controlled 208 such that the heating system 106 heats the cooking chamber 104 until the trigger core temperature 130 of the food FD sensed by the food temperature sensor 120 is reached.

The controlled power supply to the heating system 106 is reduced or ceased 210 in response to the trigger core temperature 130 being reached, with the trigger core temperature 130 being lower than the target core temperature 134, as previously described.

A control signal signifying completion of cooking of the food FD in the cooking chamber 104 is generated 212, while the power supply remains reduced or ceased, when the target core temperature 134 is sensed by the food temperature sensor 120 to be reached.

Further provided is a computer program comprising computer program code which, when executed on a computing device having one or more processors, causes the one or more processors to perform all of the steps of the method 200 according to any of the embodiments described herein. The one or more processor(s) may, for example, be included in the controller 122.

The one or more processors and/or the controller 122 can be implemented in numerous ways, with software and/or hardware, to perform the various functions required. The processor(s) and/or the controller 122 may, for example, employ one or more microprocessors programmed using software (e.g., microcode) to perform the required functions. Examples of processor components that may be employed in various embodiments of the present disclosure include, but are not limited to, conventional microprocessors, application specific integrated circuits (ASICs), and field-programmable gate arrays (FPGAs).

In various implementations, the processor(s) and/or the controller 122 may be associated with one or more storage media such as volatile and non-volatile computer memory such as RAM, PROM, EPROM, and EEPROM. The storage media may be encoded with one or more programs that, when executed on one or more processors and/or the controller 122, perform the required functions. Various storage media may be fixed within a processor or controller or may be transportable, such that the one or more programs stored thereon can be loaded into the one or more processors and/or the controller 122.

The processor(s) and/or the controller 122 may be included in the cooking appliance and/or in a cloud-based server and/or in an external device, such as a smart phone or tablet computer, separate from the cooking appliance. For example, one or more of the processor(s) and/or the controller 122 may be included in the external device that includes the user input interface 124 and/or the user output interface 126.

It is noted that the system 100 for controlling the cooking apparatus 102 may be included in the cooking appliance, e.g. the air fryer, and/or in such an external device, e.g. a smart phone, tablet computer and/or cloud-based server, that is separate from the cooking appliance.

In developing new cooking appliances, e.g. air fryers, an aim was to optimize cooking results, in other words to control the cooking process to achieve the desired core temperature whilst attaining cooked food FD having a desirable external appearance, such as a suitable degree of browning level. This may be realized via cooking parameters selection and cooking profile design. Moreover, a food temperature sensor 120, in other words a food thermometer, may assist with attaining a desired core temperature and external appearance. By selecting cooking parameters, designing the cooking profile and using such a food thermometer, even unexperienced customers can consistently achieve excellent cooking results. In non-limiting examples, the user may provide information concerning what he/she wishes to cook, in other words the food item FD, the amount (how many pieces) and thickness in case of meat and the desired doneness level, and cooking parameters and the cooking profile and the target food core temperature 134 may be automatically set. Such cooking parameters, the required cooking profile and the target core temperature 134 can be predetermined empirically via pre-testing.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A cooking apparatus (102) comprising:

a cooking chamber (104) for receiving food;
a heating system (106) for heating the cooking chamber;
a food temperature sensor (120) for sensing a core temperature of the food; and
a controller (122) configured to:

receive a target core temperature to which the food is to be heated;
receive one or more food parameters and/or one or more cooking apparatus-related parameters;
set a trigger core temperature that is lower than the target core temperature using the one or more food parameters and/or one or more cooking apparatus-related parameters;
control power supply to the heating system such that the heating system heats the cooking chamber until the trigger core temperature of the food is sensed by the food temperature sensor to be reached;
reduce or cease said controlled power supply to the heating system in response to the trigger core temperature being sensed by the food temperature sensor to be reached; and
generate a control signal signifying completion of cooking of the food in the cooking chamber, while the power supply to the heating system remains reduced or ceased, when the target core temperature is sensed by the food temperature sensor to be reached.

2. The cooking apparatus (102) according to claim 1, comprising an air circulation system (108), wherein the controller (122) is configured to control power supply to the air circulation system to circulate heated air in the cooking chamber (104) until the trigger core temperature is sensed by the food temperature sensor (120) to be reached, and to reduce or cease power supply to the air circulation system in response to the trigger core temperature being sensed by the food temperature sensor to be reached.

3. The cooking apparatus (102) according to claim 1 or claim 2, comprising a food temperature probe, the food temperature probe comprising the food temperature sensor (120).

4. The cooking apparatus (102) according to any one of claims 1 to 3, wherein the one or more food parameters is or are indicative of a type, initial condition and/or amount of the food.

5. The cooking apparatus (102) according to any one of claims 1 to 4, wherein the one or more food parameters include(s) one or more of:

a number of pieces of the food received in the cooking chamber (104);
a food filling level within the cooking chamber;
an initial temperature of the food;
a meat type or vegetable type;
at least one size dimension of the food;
a mass of the food; and
a mass per piece of the food.

6. The cooking apparatus (102) according to any one of claims 1 to 5, wherein the one or more food parameters is or are received via at least one of a user input interface (124), an optical food detection system, and a weighing scale.

7. The cooking apparatus (102) according to any one of claims 1 to 6, wherein the one or more cooking apparatus-related parameters include(s):

at least one power supply parameter indicative of an amount of power supplied to the heating system (106) to heat the cooking chamber (104) until the trigger core temperature is reached; and/or
an initial temperature of the cooking chamber prior to heating of the food towards the trigger core temperature.

8. The cooking apparatus (102) according to any one of claims 1 to 7, wherein the controller (122) is configured to, using the one or more food parameters and/or the one or more cooking apparatus-related parameters, estimate a cooking time required for the target core temperature of the food to be reached.

9. The cooking apparatus (102) according to any one of claims 1 to 8, wherein the control signal is for controlling a user output interface (126) to alert a user of the completion of cooking of the food in the cooking chamber (104), when the target core temperature is sensed by the food temperature sensor to be reached.

10. The cooking apparatus (102) according to any one of claims 1 to 9, wherein the controller (122) is configured to calculate estimations indicative of when the target core temperature of the food will be reached based on core temperature data from the food temperature sensor (120).

11. The cooking apparatus (102) according to claim 10, wherein a frequency with which the controller (122) calculates said estimations increases as the target core temperature is determined, via the core temperature data, to be closer to being reached.

12. The cooking apparatus (102) according to any one of claims 1 to 11, comprising a table-top cooking appliance, the cooking chamber (104) and the heating system (106) being included in the table-top cooking appliance.

13. The cooking apparatus (102) according to any one of claims 1 to 12, comprising an air fryer, an air cooker or a food steamer.

14. A method (200) of operating a cooking apparatus, the cooking apparatus comprising a cooking chamber for receiving food, a heating system for heating the cooking chamber, and a food temperature sensor for sensing a core temperature of the food, the method comprising:

   receiving (202) a target core temperature to which the food is to be heated;
   receiving (204) one or more food parameters and/or one or more cooking apparatus-related parameters;
   setting (206) a trigger core temperature that is lower than the target core temperature using the one or more food parameters and/or one or more cooking apparatus-related parameters;
   controlling (208) power supply to the heating system such that the heating system heats the cooking chamber until the trigger core temperature of the food is sensed by the food temperature sensor to be reached;
   reducing or ceasing (210) said controlled power supply to the heating system in response to the trigger core temperature being sensed by the food temperature sensor to be reached; and
   generating (212) a control signal signifying completion of cooking of the food in the cooking chamber, while the power supply to the heating system remains reduced or ceased, when the target core temperature is sensed by the food temperature sensor to be reached.

15. A computer program comprising computer program code which, when executed on a computing device having one or more processors, causes the one or more processors to perform all of the steps of the method (200) according to claim 14.

FIG. 1

FIG. 2

FIG. 3

FIG. 4

200

FIG. 5

Europäisches
Patentamt

European
Patent Office

Office européen
des brevets

# EUROPEAN SEARCH REPORT

Application Number

EP 23 15 9667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/269539 A1 (POLT B ROBERT [US]) 17 October 2013 (2013-10-17) * claim 7; figures 1-5, 11A-11C * * paragraph [0014] - paragraph [0016] * * paragraph [0043] * * paragraph [0053] - paragraph [0060] * * paragraph [0064] - paragraph [0072] * * paragraph [0097] - paragraph [0098] * * paragraphs [0118], [0128], [0130] * | 1-15 | INV. A47J37/06 A47J36/32 |
| A | WO 2019/033089 A1 (BRAVA HOME INC [US]) 14 February 2019 (2019-02-14) * paragraph [0037]; figures 5-7 * * paragraph [0051] - paragraph [0052] * * paragraph [0074] * * paragraph [0119] - paragraph [0120] * * paragraph [0166] * | 1-15 | |

TECHNICAL FIELDS SEARCHED (IPC)

A47J

The present search report has been drawn up for all claims

| Place of search | Date of completion of the search | Examiner |
|---|---|---|
| Munich | 5 September 2023 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9667

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | Publication date | Patent family member(s) | Publication date |
|---|---|---|---|
| US 2013269539 A1 | 17-10-2013 | NONE | |
| WO 2019033089 A1 | 14-02-2019 | CN 111527348 A | 11-08-2020 |
| | | EP 3665419 A1 | 17-06-2020 |
| | | US 2019053332 A1 | 14-02-2019 |
| | | US 2023269832 A1 | 24-08-2023 |
| | | WO 2019033089 A1 | 14-02-2019 |

For more details about this annex : see Official Journal of the European Patent Office, No. 12/82